# EUROPEAN PATENT SPECIFICATION

(11) **EP 2 195 885 B1**
(45) Date of publication and mention of the grant of the patent: **31.08.2011**
(21) Application number: 08836386.6
(22) Date of filing: 25.09.2008
(51) Int. Cl.: H01R 13/03, C25D 5/50

(54) **ELECTRICAL CONTACT ELEMENT AND A METHOD OF PRODUCING THE SAME**
ELEKTRISCHES KONTAKTELEMENT UND SEIN HERSTELLUNGSVERFAHREN
ELEMENT DE CONTACT ELECTRIQUE ET SON PROCEDE DE PRODUCTION

(30) Priority: 01.10.2007 DE 102007047007
(43) Date of publication of application: 16.06.2010
(73) Proprietor: Tyco Electronics AMP GmbH, 64625 Bensheim (DE)
(72) Inventor: MÜLLER, Walter, D-91614 Moenchsroth (DE); SCHMIDT, Helge, D-67346 Speyer (DE); WENDLING, Hannes, D-63225 Langen (DE); HORN, Jochen, 01683 Nossen (DE)
(74) Representative: Grünecker, Kinkeldey, Stockmair & Schwanhäusser Anwaltssozietät
(86) International application number: PCT/EP2008/008161
(87) International publication number: WO 2009/043536

(56) References cited:
- WO-A-2006/134665
- US-A- 5 916 695
- US-A1- 2004 264 820
- US-A1- 2005 106 408
- US-B1- 6 403 234
- KAY P J ET AL: "BARRIER LAYERS AGAINST DIFFUSION" TRANSACTIONS OF THE INSTITUTE OF METAL FINISHING, MANEY PUBLISHING, BIRMINGHAM, GB, vol. 59, 1 January 1979 (1979-01-01), pages 169-174, XP008028696 ISSN: 0020-2967

## Description

The present invention relates to a method of producing an electrical contact element according to the preamble of claim 1. The invention further relates to an electrical contact element according to the preamble of claim 9.

The requirements of electrical contact elements are many and varied. Thus, contact elements may for example be used as plug-in contacts. In this case, electrical contact elements need to be capable of being plugged in and unplugged repeatedly with the lowest possible insertion forces, without the contact resistance changing appreciably. Above all, electrical contact elements which are used in the production of electrical systems, such as for example an anti-lock braking system (ABS), need to reliably ensure electrical contacting and prevent misconnections.

A contact element is known from DE 103 49 584 A1. The contact element disclosed therein comprises a press-fit contact and this document proposes to prevent chip formation upon pressing a press-fit pin into a socket by providing an electrical contact element with an outer layer which has a layer thickness of between 0.1 µm and 0.8 µm.

Document US 2003091855 A1 discloses a method of producing an electrical contact element, in which a multilayer structure is formed by applying a diffusion barrier layer to a base material and at least one metallic layer made of metal to the diffusion barrier layer, at least one layer formed of tin being applied as the metallic layer, the multilayer structure is heat-treated in such a way that at least one element of the layer located under the outer layer of the multilayer structure diffuses into said outer layer and the heat - treated outer layer comprises tin.

It is known that electrical contact elements with a contact surface formed for example of pure tin have a tendency to form tin whiskers. Tin whiskers may lead to malfunctioning in electronic assemblies.

However, reducing layer thickness does not always stop whisker formation. Just slight abrasion and accumulation of abraded tin may lead to the occurrence of whiskers.

Taking the above, known problems as basis, it is an object of the present invention to provide a method by which the formation of tin whiskers is avoided. A further object of the present invention is to provide a contact element without any risk of tin whisker formation.

The method aspect of the present invention is achieved by a method according to claim 1. According to the invention, a diffusion barrier layer is applied to a base material, so preventing the base material from diffusing into the outer layer. The diffusion barrier layer according to the invention serves accordingly as a diffusion barrier and prevents the outer layer from being alloyed with the element(s) of the base material. At least one metallic layer is applied to the diffusion barrier layer, at least one layer formed of tin being applied as the metallic layer. Accordingly, for example, either just a pure tin layer is applied to the diffusion barrier layer or a pure tin layer and a further metallic layer is applied.

According to the invention, the multilayer structure comprising the diffusion barrier layer and the at least one metallic layer is heat-treated, i.e. is preferably subjected to a tempering method. This heat treatment of the multilayer structure causes at least one element to diffuse into the outer layer. As a result of the heat treatment according to the invention, the outer layer of the multilayer structure is virtually completely permeated by the at least one element of the layer thereunder and is thus formed of at least two metallic elements. The outer layer is preferably heat treated in such a way that it is formed solely or virtually solely of at least two metallic elements, i.e. as a result of diffusion the element from the layer located under the outer layer completely or virtually completely permeates the outer layer right up to the surface of the layer. As a result of the associated mixing of the at least two metallic elements, tin whisker formation is reliably prevented. Alloying on of the outer layer additionally offers the possibility of increasing the wear resistance of the surface of connector elements by a suitable alloy composition. The temperature and duration of the heat treatment are dependent on the metals used to form the metallic layers and on the layer thickness to be achieved.

The element diffused into the outer layer may come from the diffusion barrier layer, for example.

Preferably, thermally accelerated diffusion completely throughout the multilayer structure is obtained. In this way, a heat-treated outer layer is formed, which comprises a mixture of tin with at least one further metallic element. The heat-treated outer layer is accordingly not a pure tin layer, effectively preventing the risk of tin whisker formation.

According to a preferred exemplary embodiment of the method according to the invention, the outer layer is thoroughly alloyed with the at least one element right up to the surface. The heat treatment is preferably performed in such a way that the element present in the underlying layer is diffused right up to the surface of the outer layer, i.e. over the entire thickness of the outer layer. The resultant tin alloy layer may consist of a crystal mixture, mixed crystal or of an intermetallic compound.

One preferred further development of the method according to the invention has at least two metallic layers formed of different metals applied to the diffusion barrier layer and the elements of the layers are mixed together by diffusion. In addition to a tin layer, according to this preferred embodiment a further metallic layer is accordingly applied to the diffusion barrier layer. The tin layer does not have to be applied as the outer layer. The crucial factor is merely that the heat-treated outer layer comprises tin and at least one further metallic element. The various metallic layers are applied individually to the diffusion barrier layer. This may take place, for example, as a result of physical vapour deposition (PVD), chemical vapour deposition (CVD), periodic reverse electroplating or the like. The various layers are preferably formed in a sandwich structure with mutually parallel flat layers. The number of alternately applied different metallic layers is determined by the desired intended application or by the desired layer thickness. Through the subsequent heat treatment, the metallic layers are preferably thoroughly alloyed, in order to provide an outer layer formed on the diffusion barrier layer by mixing tin with at least one further metallic element. Depending on the elements used, an intermediate layer may form for example between the outer layer obtained and the diffusion barrier layer, which intermediate layer is formed of a mixture of the elements of the metallic layers and of the element of the diffusion barrier layer.

According to a preferred embodiment, the outer layer is formed from tin. The applied outer layer of tin, in particular pure tin, is mixed by diffusion with at least one further element by the heat treatment effected. As a result of the heat treatment, the tin layer is thoroughly alloyed with at least one further element, whereby an outer layer not consisting of pure tin is obtained, which does not have a tendency to form whiskers.

According to a preferred further development, the at least one metallic layer formed under the outer layer is made of silver, gold, bismuth, iron, indium, zinc, cadmium, palladium and/or tin. For example, a combination of tin/silver layers is applied to the diffusion barrier layer, wherein a plurality of tin and a plurality of silver layers may be applied alternately one over the other, in order to achieve a uniform outer layer of relatively large thickness after heat treatment for a reasonable treatment time. In this way, an outer layer with relatively large layer thicknesses of greater than 2 µm may be produced. This brings with it, in particular, the advantage that contact surfaces may be provided for connector contacts which have advantageous tribological characteristics.

Depending on the requirements to be met, a phosphorus layer may also be applied in combination with, for example, tin or silver layers, such that the phosphor diffuses into the adjoining layer as a result of the heat treatment.

The device-related problem on which the invention is based is solved by an electrical wherein the outer layer of the coating is a layer mixed by diffusion of tin and at least one further metallic element. The outer layer is particularly preferably a virtually complete mixture of the at least two different elements. A contact element, for the purposes of describing the invention, may be for example a press-fit pin terminal or a connector contact. The outer, thoroughly alloyed layer according to the invention is provided at least in the area of a contact element which comes into contact with a further contact element. For example, the outer, thoroughly alloyed layer forms a contact surface of a connector contact, of a press-fit pin or the like.

According to a particularly preferred embodiment, the outer layer is a thoroughly alloyed layer, i.e. a layer completely permeated by tin and at least one further element. The elements are in particular mixed together right up to the surface of the outer layer.

Further details, advantages and features of the present invention will become apparent from the following description of exemplary embodiments together with the drawings, in which:
Figs. 1 a and 1 b are a first schematic sectional representation of one exemplary embodiment of a multilayer structure of an electrical connector element according to the invention before and after heat treatment;
Fig. 2 shows a comparative example, which shows a multilayer structure not according to the invention of a connector element; and
Figs. 3a-3d show further exemplary embodiments of a connector element according to the invention.

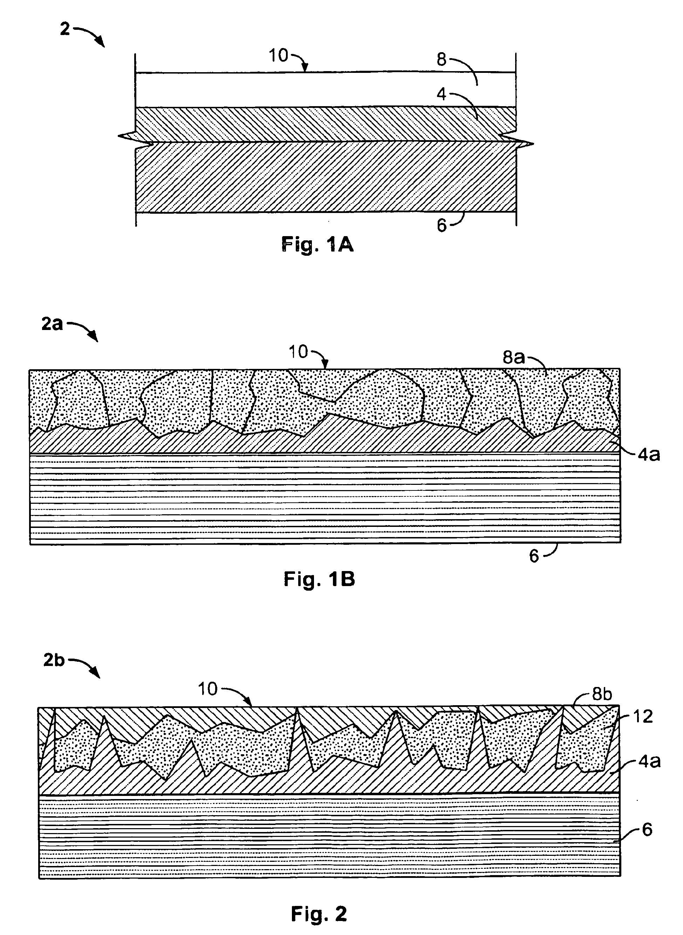

Figure 1a shows a multilayer structure 2 of a press-fit pin, in which a diffusion barrier layer 4 formed of nickel has been applied to a base material 6. A 2 µm thick outer layer 8 formed of tin is formed on the nickel diffusion barrier layer 4.

After applying the nickel diffusion barrier layer 4 and the outer layer 8, which is a pure tin layer, the multilayer structure 2 is heat treated at 90°C for 4 hours.

The duration and temperature of the heat treatment are dependent on the materials used and the desired layer thickness. Since the outer layer 8 is formed of tin, however, the heat treatment temperature should not exceed the melting point of tin, i.e. 232°C.

Once the heat treatment is complete, the resultant heat-treated multilayer structure 2a comprises a heat-treated recrystallised outer layer 8a (cf. Fig. 1 b). This layer 8a consists of a mixture of tin and nickel elements. Due to the heat treatment performed, nickel elements have diffused out of the diffusion barrier layer 4 into the outer layer 8 located thereabove. As is clear from Figure 1b, the heat treatment performed has brought about complete, thorough mixing of the outer layer 8. The heat-treated outer layer 8a comprises both tin and nickel elements. The heat treatment has the effect, in particular, that the nickel elements diffuse right up to the surface 10 of the outer layer 8, so ensuring that the heat-treated outer layer 8a does not contain any pure tin even close to the surface 10. In this way, a press-fit pin with a contact surface is provided which does not carry any risk of tin whisker formation.

In contrast to the above exemplary embodiment according to the invention, Figure 2 shows a comparative example, in which the heat-treated outer layer 8b is a pure tin layer.

Due to incomplete heat treatment, the outer layer 8b according to the comparative example shown in Figure 2 is not a thoroughly alloyed layer comprising a mixture of tin and nickel elements. In particular, because of the incomplete heat treatment no diffusion of the nickel elements up to the surface 10 of the outer layer 8b has been brought about. Although mixing of tin and nickel elements has been achieved (as illustrated by the intermediate layer 12), this comparative example carries a risk of whisker formation, since the outer layer 8b is a pure tin layer.

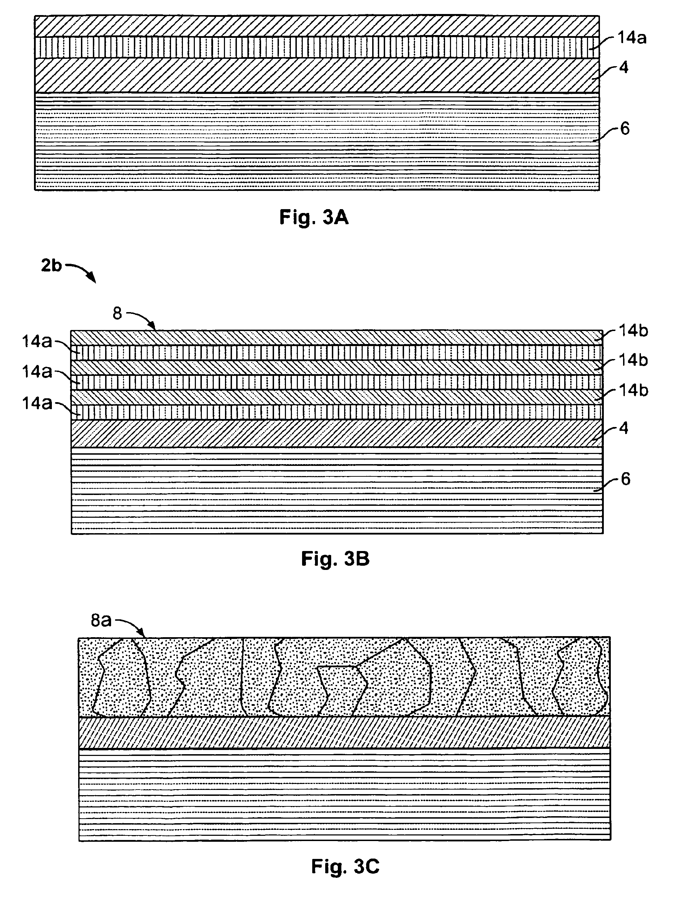

Figures 3a-3d show a further exemplary embodiment according to the invention, in which a plurality of layers have been applied to the nickel diffusion barrier layer 4.

Figure 3a shows a layer 14a formed of silver, which has been formed on the diffusion barrier layer 4. Depending on the desired layer thickness, a plurality of silver layers 14a may also be applied, as shown in Figure 3b. There, the silver layer 14a has been applied to the diffusion barrier layer 4 alternately with a tin layer 14b. The alternate application of silver and tin layers 14a, 14b forms a sandwich structure, in which the outer layer 8 is a tin layer 14b.

The resultant multilayer structure 2b is then subjected to a heat treatment method according to the invention, whereby the various layers 14a, 14b are thoroughly alloyed in order to form a heat-treated outer layer 8a consisting of tin and silver elements. A pure tin layer is thus avoided as a constituent of the outer layer 8a (cf. Fig. 3c).

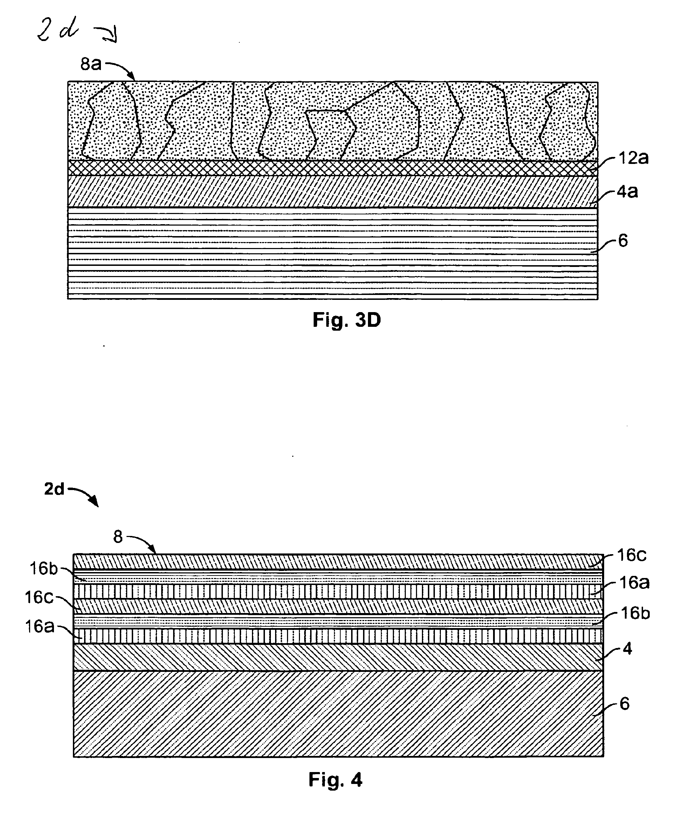

Depending on the metallurgical characteristics of the layers formed, it is possible, as shown in Figure 3d, to form an intermediate layer 12a between the heat-treated outer layer 8a and the diffusion barrier layer 4a. Unlike in the comparative example according to Figure 2, the multilayer structure 2c according to Figure 3d does not carry any risk of whisker formation, since the outer layer 8a is a thoroughly alloyed outer layer 8a.

As shown in Fig. 4, a multilayer structure 2d may be formed which is produced from three different elements. Figure 4 shows a multilayer structure 2d in which a silver layer 16a, a phosphorus layer 16b and a tin layer 16c are formed alternately on the diffusion barrier layer 4 in such a way that the outer layer 8 is formed of a tin layer 16c.

This multilayer structure 2d is heat-treated according to the invention in such a way that the plurality of layers 16a, 16b, 16c are thoroughly alloyed, as described above in relation to Figure 3c.

## Claims

1. A method of producing an electrical contact element, in which a multilayer structure (2b; 2c; 2d) is formed by
applying a diffusion barrier layer (4) to a base material (6),
applying a plurality of a combination of at least two metallic layers (14a, 14b; 16a, 16c) made of different metals to the diffusion barrier layer (4), wherein one layer (14b; 16c) of said at least two metallic layers (14a, 14b; 16a, 16c) is formed of tin and wherein the metallic layers (14a, 14b; 16a, 16c) are applied alternately one over the other, and heat-treating the multilayer structure (2b; 2c; 2d) in such a way that the elements of the plurality of the combination of at least two metallic layers (14a, 14b; 16a, 16c) are mixed by diffusion, wherein a thus formed heat-treated outer layer (8a) of the multilayer structure (2b; 2c; 2d) comprises tin and wherein said outer layer (8a) is thoroughly alloyed with said elements right up to the surface (10) thereof.

2. A method according to claim 1, **characterised in that** thermally accelerated diffusion completely throughout the multilayer structure (2b; 2c; 2d) is performed.

3. A method according to claim 1 or 2, **characterised in that** an outer layer (8) of the plurality of a combination of at least two metallic layers (14a, 14b; 16a, 16c) is formed of tin.

4. A method according to claim 1 or 2, **characterised in that** an outer layer (8) of the plurality of a combination of at least two metallic layers (14a, 14b; 16a, 16c) is formed of a metal other than tin.

5. A method according to any one of the preceding claims, **characterised in that** the other one of the at least two metallic layers (14a; 16a) is selected from the group of: silver, gold, bismuth, iron, indium, zinc, cadmium, and/or palladium.

6. A method according to any one of the preceding claims, **characterised in that** a layer (16b) of phosphorus is additionally formed under the outer layer (8), said layer (16b) diffusing into the outer layer (8).

7. A method according to any one of the preceding claims, **characterised in that** the diffusion barrier layer (4) is formed of nickel.

## Patentansprüche

1. Verfahren zur Herstellung eines elektrischen Kontaktelements mit Ausbilden einer mehrschichtigen Struktur (2b; 2c; 2d) durch
Aufbringen einer Diffusionssperrschicht (4) auf ein Trägermaterial (6),
Aufbringen mehrerer Schichten einer Kombination von mindestens zwei Metallschichten (14a, 14b; 16a, 16c), die aus verschiedenen Metallen bestehen, auf die Diffusionssperrschicht (4), wobei eine Schicht (14b; 16c) der mindestens zwei Metallschichten (14a, 14b; 16a, 16c) aus Zinn geformt wird, und wobei die Metallschichten (14a, 14b; 16a, 16c) abwechselnd übereinander aufgebracht werden, und Wärmebehandlung der mehrschichtigen Struktur (2b; 2c; 2d) auf eine solche Weise, dass die Elemente der mehreren Schichten der Kombination von mindestens Metallschichten (14a, 14b; 16a, 16c) durch Diffusion vermischt werden, wobei eine so gebildete wärmebehandelte äußere Schicht (8a) der mehrschichtigen Struktur (2b; 2c; 2d) Zinn aufweist, und wobei die äußere Schicht (8a) mit den Elementen bis zu ihrer Oberfläche (10) durchlegiert wird.

2. Verfahren nach Anspruch 1, **dadurch gekennzeichnet, dass** eine thermisch beschleunigte Diffusion in der gesamten mehrschichtigen Struktur (2b; 2c; 2d) durchgerührt wird.

3. Verfahren nach Anspruch 1 oder 2, **dadurch gekennzeichnet, dass** eine äußere Schicht (8) der mehreren Schichten einer Kombination von mindestens zwei Metallschichten (14a, 14b; 16a, 16c) aus Zinn geformt wird.

4. Verfahren nach Anspruch 1 oder 2, **dadurch gekennzeichnet, dass** eine äußere Schicht (8) der mehreren Schichten einer Kombination von mindestens zwei Metallschichten (14a, 14b; 16a, 16c) aus einem anderen Metall als Zinn geformt wird.

5. Verfahren nach einem der vorstehenden Ansprüche, **dadurch gekennzeichnet, dass** die andere von den mindestens zwei Metallschichten (14a; 16a) aus der Gruppe ausgewählt ist, die aus Silber, Gold, Bismut, Eisen, Indium, Zink, Cadmium und/oder Palladium besteht.

6. Verfahren nach einem der vorstehenden Ansprüche, **dadurch gekennzeichnet, dass** unter der äußeren Schicht (8) zusätzlich eine Schicht (16b) aus Phosphor gebildet wird, wobei die Schicht (16b) in die äußere Schicht (8) diffundiert.

7. Verfahren nach einem der vorstehenden Ansprüche, **dadurch gekennzeichnet, dass** die Diffusionssperrschicht (4) aus Nickel geformt wird.

## Revendications

1. Procédé de production d'un élément de contact électrique, dans lequel une structure multicouche (2b; 2c; 2d) est formée en
appliquant une couche formant barrière de diffusion (4) sur un matériau de base (6),
appliquant une pluralité d'une combinaison d'au moins deux couches métalliques (14a, 14b; 16a, 16c) formées de métaux différents sur la couche formant barrière de diffusion (4), dans lequel une couche (14b; 16c) desdites au moins deux couches métalliques (14a, 14b; 16a, 16c) est constituée d'étain et dans lequel les couches métalliques (14a, 14b; 16a, 16c) sont appliquées en alternance l'une sur l'autre, et en soumettant la structure multicouche (2b; 2c; 2d) à un traitement thermique de sorte que les éléments de la pluralité de la combinaison d'au moins deux couches métalliques (14a, 14b; 16a, 16c) se mélangent par diffusion, dans lequel une couche extérieure ainsi formée par traitement thermique (8a) de la structure multicouche (2b; 2c; 2d) comporte de l'étain et dans lequel ladite couche extérieure (8a) est fortement alliée auxdits éléments jusqu'à sa surface (10).

2. Procédé selon la revendication 1, **caractérisé par le fait qu'**une diffusion accélérée thermiquement est réalisée à travers la structure multicouche (2b; 2c; 2d) tout entière.

3. Procédé selon la revendication 1 ou 2, **caractérisé par le fait qu'**une couche extérieure (8) de la pluralité d'une combinaison d'au moins deux couches métalliques (14a, 14b; 16a, 16c) est constituée d'étain.

4. Procédé selon la revendication 1 ou 2, **caractérisé par le fait qu'**une couche extérieure (8) de la pluralité d'une combinaison d'au moins deux couches métalliques (14a, 14b; 16a, 16c) est constituée d'un autre métal que l'étain.

5. Procédé selon l'une quelconque des revendications précédentes, **caractérisé par le fait que** l'autre couche des au moins deux couches métalliques (14a, 16a) est choisie dans le groupe constitué de: l'argent, l'or, le bismuth, le fer, l'indium, le zinc, le cadmium et/ou le palladium.

6. Procédé selon l'une quelconque des revendications précédentes, **caractérisé par le fait qu'**une couche (16b) de phosphore est formée, en plus, sous la couche extérieure (8), ladite couche (16b) diffusant dans la couche extérieure (8).

7. Procédé selon l'une quelconque des revendications précédentes, **caractérisé par le fait qu'**une couche formant barrière de diffusion (4) est constituée de nickel.
